**Europäisches Patentamt**

**European Patent Office**

**Office européen des brevets**

(19)

(11) Veröffentlichungsnummer : **0 373 312 B1**

# EUROPÄISCHE PATENTSCHRIFT

(12)

(45) Veröffentlichungstag der Patentschrift :
**30.09.92 Patentblatt 92/40**

(51) Int. Cl.$^5$ : **B01D 53/34**

(21) Anmeldenummer : **89118568.8**

(22) Anmeldetag : **06.10.89**

(54) **Verfahren zur Verringerung von PCDD/PCDF-Emissionen aus Abgasstrecken von Abfallverbrennungsanlagen.**

(30) Priorität : **13.12.88 DE 3841858**

(43) Veröffentlichungstag der Anmeldung :
**20.06.90 Patentblatt 90/25**

(45) Bekanntmachung des Hinweises auf die
Patenterteilung :
**30.09.92 Patentblatt 92/40**

(84) Benannte Vertragsstaaten :
**AT BE CH FR GB IT LI LU NL SE**

(56) Entgegenhaltungen :
**DE-A- 3 623 015**
**US-A- 4 654 144**
**PATENT ABSTRACTS OF JAPAN, vol.12, no.**
**472 (C-551)(3319) 09 Dezember 1988, & JP-A-63**
**190621 (KANTO DENKA KOGYO K.K.) 08Au-**
**gust 1988**

(73) Patentinhaber :
**KERNFORSCHUNGSZENTRUM KARLSRUHE GMBH**
**Weberstrasse 5 Postfach 3640**
**W-7500 Karlsruhe 1 (DE)**

(72) Erfinder : **Hunsinger, Hans**
**Goethestrasse 59**
**W-7504 Weingarten (DE)**
Erfinder : **Vogg, Hubert, Prof. Dr.**
**De-Coster-Strasse 2**
**W-7500 Karlsruhe (DE)**
Erfinder : **Stieglitz, Ludwig, Dr.**
**Rosenstrasse 6**
**W-7504 Walzbachtal 2 (DE)**

EP 0 373 312 B1

Anmerkung : Innerhalb von neun Monaten nach der Bekanntmachung des Hinweises auf die Erteilung des europäischen Patents kann jedermann beim Europäischen Patentamt gegen das erteilte europä-ische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patent-übereinkommen).

**Beschreibung**

Die Erfindung betrifft ein Verfahren zur Verringerung von PCDD/PCDF Emissionen aus Abgasen von Abfallverbrennungsanlagen.

Es ist bekannt, daß Verbrennungsanlagen, insbesondere Abfallverbrennungsanlagen, die mit chlorhaltigen Brennstoffen betrieben werden, mit dem Abgas Polychlordibenzodioxine (PCDD) und/oder Polychlordibenzofurane (PCDF) emittieren.

Wie Untersuchungen des Kernforschungszentrums Karlsruhe ergeben haben, wird die Entstehung von PCDD und PCDF durch Kontakt des chlorhaltigen Abgases mit etwa 300° C bis 500 ° C heißen Oberflächen oder Schwebstoffpartikeln im Verbrennungsraum begünstigt.

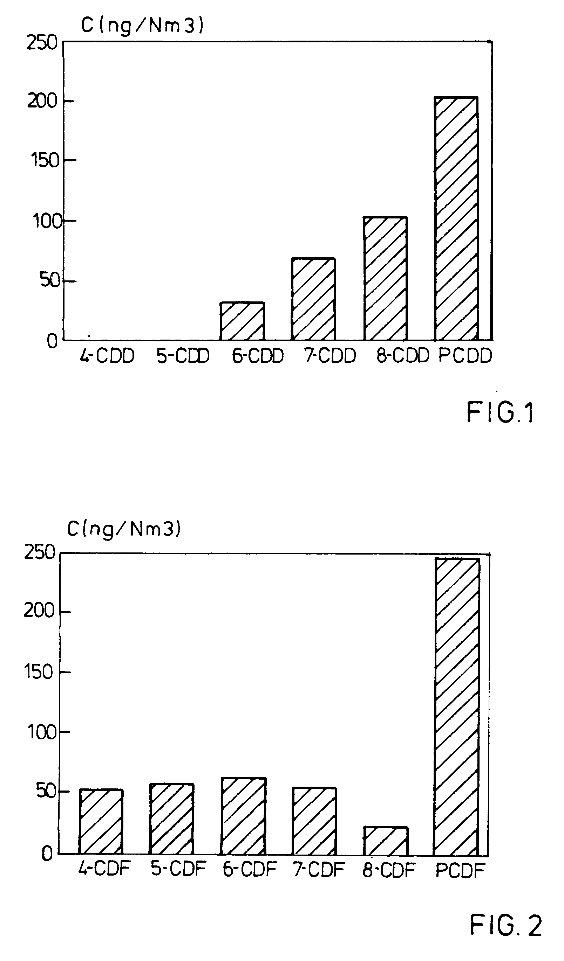

In Fig. 1 sind PCDD-Grundkonzentrationen angegeben, die im Abgas einer Abfallverbrennungs-Pilotanlage des Kernforschungszentrums Karlsruhe gemessen wurden.

Auf der Ordinate ist die PCDD-Konzentration in ng/Nm³ Abgas aufgetragen.

Auf der Abszisse ist die Anzahl der Chloratome in PCDD angegeben, wobei Isomere mit derselben Anzahl von Chloratomen zusammengefaßt sind. Die Zahl der Chloratome X in PCDD ist durch die Bezeichnung X-CDD wiedergegeben. Die Säule mit der Bezeichnung PCDD gibt die Summenkonzentration aller PCDD an.

Fig. 2 zeigt ein entsprechendes Schaubild für die PCDF-Verbindungen.

Bisher ist kein Verfahren bekannt geworden, mit dem die Konzentration von PCDD und/oder PCDF im Abgas von Verbrennungsanlagen vermindert werden kann.

Die Aufgabe der Erfindung besteht darin, ein einfaches und wirtschaftliches Verfahren aufzuzeigen, mit dessen Hilfe sich die Konzentration der Schadstoffe PCDD und/oder PCDF im Abgas von Abfallverbrennungsanlagen wirksam vermindern läßt.

Die Aufgabe wird erfindungsgemäß durch die im Kennzeichen des Hauptanspruchs aufgeführten Maßnahmen gelöst.

Die Unteransprüche geben besonders vorteilhafte Ausgestaltungen des erfindungsgemäßen Verfahrens an.

Es hat sich gezeigt, daß die PCDD- und PCDF-Konzentrationen wirksam vermindert werden können, wenn das Abgas mit überhitztem Wasserdampf vermischt wird.

Durch Nutzung der anfallenden Wärme der Abfallverbrennungsanlage kann überhitzter Wasserdampf von mindestens 200° C erzeugt werden, der durch eine Düse dem heißen Rohabgas zugemischt wird.

Eine andere Möglichkeit besteht darin, mit einer Zweistoffdüse Wasser in die Abgasstrecke einzusprühen. Der feine Wassernebel verdampft im heißen Rohgasstrom sofort. Auf diese Weise wird die Abwärme des Rohgases genutzt und die Temperatur des Rauchgases abgesenkt. Dies ist besonders vorteilhaft, weil die sekundäre PCDD/PCDF-Bildung in den nachfolgenden Staubabscheidern bei höheren Temperaturen und längeren Verweilzeiten der Flugasche in diesen Komponenten wirksam verhindert wird.

Als Treibgas ist Luft geeignet.

Die Emission von PCDD und PCDF läßt sich besonders wirkungsvoll vermindern, wenn als Treibgas ein Ozon/Luftgemisch verwendet wird.

Weiterhin ist es besonders vorteilhaft, wenn anstelle von reinem Wasser mit Hilfe von Treibgas eine wäßrige Lösung eines starken Oxidationsmittels wie Wasserstoffperoxid in die Abgasstrecke eingesprüht wird.

Bei Anwesenheit von $SO_2$ im Verbrennungsabgas bildet sich jedoch bei Temperaturen oberhalb von 250° C teilweise $SO_3$, weshalb sich in diesem Fall eine Begrenzung der Temperatur auf 250° C empfiehlt.

Die Emission von PCDD und PCDF läßt sich ferner dadurch vermindern, daß mit Hilfe von Treibgas eine wäßrige Lösung eines katalytisch wirksamen Metallsalzes versprüht wird. Als katalytisch wirksame Metallsalze kommen insbesondere Eisensalze in Frage. Ein besonders wirksames Eisensalz ist Ammoniumeisen-II-sulfat, $(NH_4)_2Fe(SO_4)_2$.

Prinzipiell wird die Emission von PCDD und PCDF umso stärker vermindert, je höher die Temperatur des überhitzten Wasserdampfes ist.

Durch steigende Wasserdampfkonzentrationen im Abgas vermindert sich die Emission von PCDD und PCDF ebenfalls.

Die Menge des einzuspeisenden Wasserdampfes ist jedoch aus wirtschaftlichen Gesichtspunkten begrenzt. Gute Ergebnisse werden mit Wasserdampfkonzentrationen von bis zu 50 g/Nm³ Abgas erzielt.

Im Fall der Versprühung von wäßrigen Lösungen werden zweckmäßigerweise mit Wasserstoffperoxid eine Konzentration von etwa 80 mg/Nm³ Abgas und mit Ammoniumeisen-II-sulfat eine Konzentration von etwa 100 mg/Nm³ Abgas verwendet.

Jedoch werden auch hier die anzuwendenden Konzentrationen durch wirtschaftliche Gesichtspunkte mitbestimmt.

Die Erfindung wird im folgenden anhand von Durchführungsbeispielen näher erläutert.

Beispiel 1

Verwendung von überhitztem Dampf.

Überhitzter Dampf wurde nach dem Kessel in das mit Flugstäuben beladene Rohgas eingespeist. Der Dampf wurde durch Abwärmenutzung erzeugt.

Die Konzentration des zugemischten Wasserdampfs im Rohgas betrug 50 g/Nm³ Abgas.

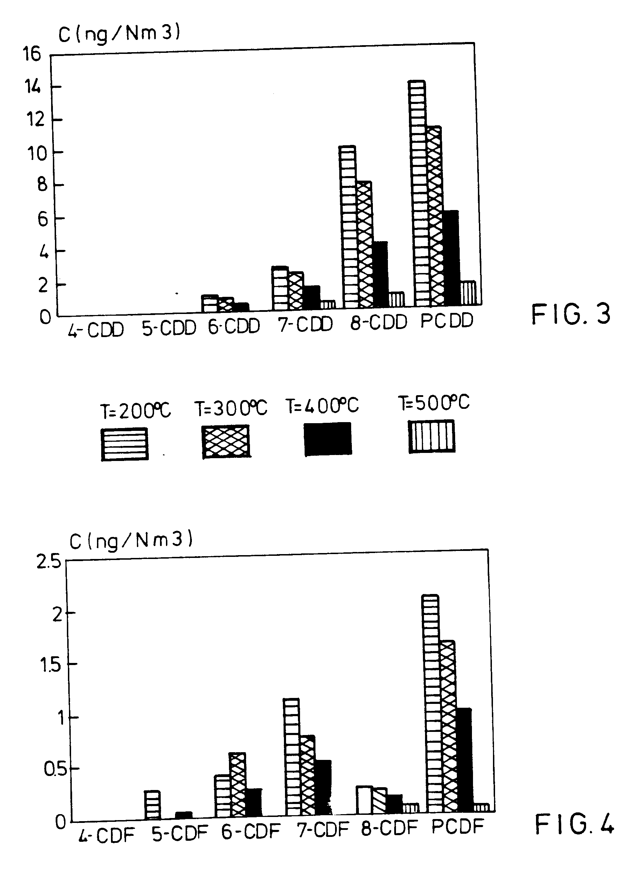

Fig. 3 zeigt die Verminderung der Emission von PCDD in Abhängigkeit von der Wasserdampftemperatur. Wie der Vergleich mit Fig. 1 ergibt, wird die Gesamtemission von PCDD bereits bei Wasserdampftemperaturen von 200° C um über 90 % vermindert. Eine weitere drastische Verminderung ergibt sich durch höhere Wasserdampftemperaturen.

In Fig. 4 ist die Verminderung der Emission von PCDF in Abhängigkeit von der Wasserdampftemperatur dargestellt. Auch in diesem Fall wird die Emission durch 200° C heißen Wasserdampf um etwa 90 % vermindert. Ebenso wie bei PCDD erweisen sich höhere Wasserdampftemperaturen als nochmals deutlich wirksamer.

Beispiel 2

Verwendung von Wasser.

Mit Hilfe einer Zweistoffdüse und Luft als Treibgas wird 27 g/Nm³ Wasser in das mit Flugstäuben beladene Rohgas eingesprüht. Die Abgastemperatur vermindert sich von 250° C auf 200° C. Die Emission von PCDD und PCDF vermindert sich in der selben Weise wie in Beispiel 1 bei Wasserdampftemperaturen von 200° C.

Zusätzlich werden bei dieser Methode sekundärablaufende Bildungsprozesse von PCDD/PCDF auf Flugstäuben in nachgeschalteten Staubabscheidern bei Temperaturen oberhalb 250° C vermieden.

Beispiel 3

Verwendung einer Metallsalze enthaltenden wäßrigen Lösung.

a) In Wasser gelöstes Ammoniumeisen-II-sulfat wird in das Rohgas eingesprüht. Die Ammoniumeisen-II-sulfat-Konzentration und die Menge des Wassers werden so gewählt, daß sich im Rohgas eine Ammoniumeisen-II-konzentration von 100 mg/Nm³ Abgas ergibt.

b) Feindisperses Ammoniumeisen-II-sulfat wird mit Hilfe eines Injektors in das Rohgas eingestäubt.

Die Konzentration im Rohgas beträgt wie im Fall a) 100 mg/Nm³ Abgas.

Zusätzlich wird in beiden Fällen nachgeschaltet überhitzter Wasserdampf unter denselben Bedingungen wie in Beispiel 1 eingespeist. Die Wasserdampftemperatur betrug 400° C.

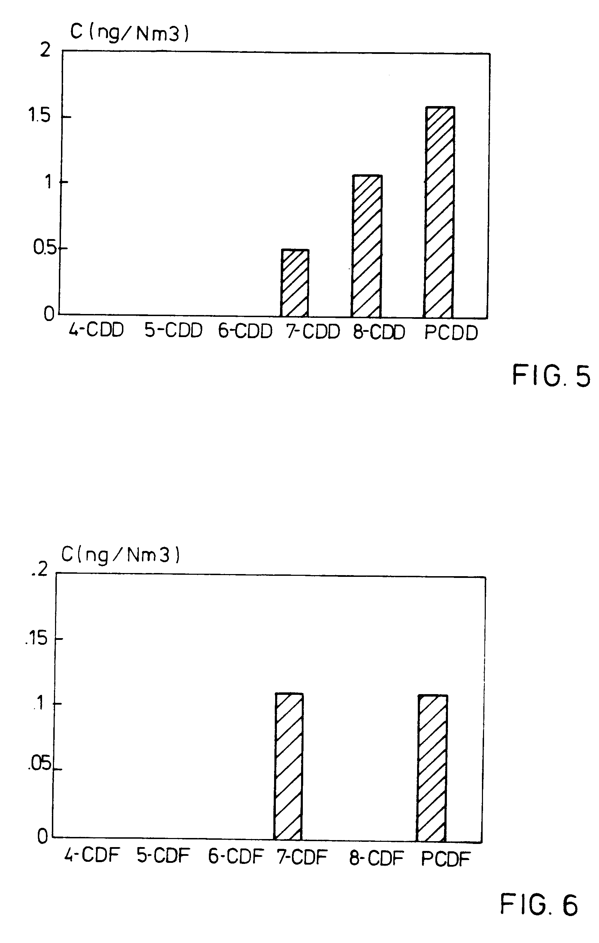

Wie in Fig. 5 hervorgeht, konnte hierdurch die Emission von PCDD nochmals beträchtlich vermindert werden. Die Konzentration von PCDD lag nahezu eine Größenordnung unter der PCDD-Konzentration, die sich bei der Einspeisung von reinem Wasserdampf von 400° C ergab.

Fig. 6 zeigt eine ähnlich starke Verminderung der PCDF-Emission.

Beispiel 4

Der Versuch von Beispiel 3a wird wiederholt, wobei jedoch Ammoniumeisen-II-sulfat durch Wasserstoffperoxid ersetzt wurde.

Eine zusätzliche Dampfeinspeisung ist nicht erforderlich.

Die Wasserstoffperoxidkonzentration im Abgas betrug 80 mg/Nm³ Abgas.

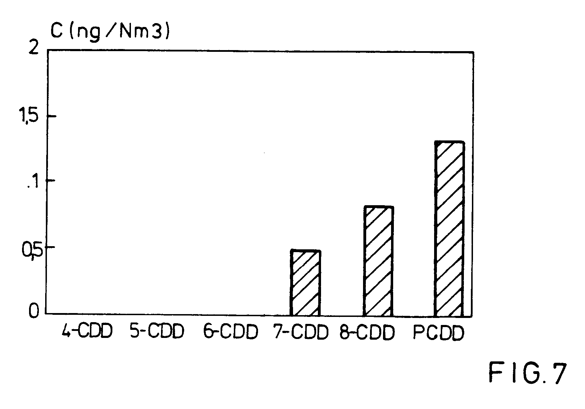

Fig. 7 zeigt, daß die Emission von PCDD gegenüber Beispiel 3 nochmals vermindert wird.

PCDF kann nicht mehr nachgewiesen werden.

**Patentansprüche**

1. Verfahren zur Verringerung von PCDD/PCDF-Emissionen aus Abgasen von Abfallverbrennungsanlagen, dadurch gekennzeichnet, daß in die Abgasstrecke überhitzter Wasserdampf eingeleitet oder in der Abgasstrecke durch Einleiten von Wasser überhitzter Wasserdampf erzeugt wird.

2. Verfahren nach Anspruch 1, dadurch gekennzeichnet, daß zusammen mit dem eingeleiteten Wasserdampf oder Wasser katalytisch wirksame Metallsalze, vorzugsweise Eisensalze, eingebracht werden.

3. Verfahren nach Anspruch 1, dadurch gekennzeichnet, daß zusammen mit dem eingeleiteten Wasserdampf oder Wasser starke Oxidationsmittel eingebracht werden.

4.  Verfahren nach Anspruch 2, dadurch gekennzeichnet, daß als Eisensalz Ammoniumeisen-II-sulfat verwendet wird.

5.  Verfahren nach Anspruch 3, dadurch gekennzeichnet, daß als Oxidationsmittel Wasserstoffperoxid oder Ozon verwendet wird.

6.  Verfahren nach einem der Ansprüche 1 bis 5, dadurch gekennzeichnet, daß die Temperatur des eingeleiteten oder erzeugten Wasserdampfs mindestens 200° C beträgt.


## Claims

1.  Method of reducing PCDD/PCDF emissions from waste gases of refuse incinerators, characterised in that superheated water vapour is introduced into the waste gas path, or superheated water vapour is produced in the waste gas path by the introduction of water.

2.  Method according to claim 1, characterised in that, together with the introduced water vapour or water, catalytically active metallic salts, preferably iron salts, are used.

3.  Method according to claim 1, characterised in that, together with the introduced water vapour or water, strong oxidising agents are used.

4.  Method according to claim 2, characterised in that ammonium iron-II-sulphate is used as the iron salt.

5.  Method according to claim 3, characterised in that hydrogen peroxide or ozone is used as the oxidising agent.

6.  Method according to one of claims 1 to 5, characterised in that the temperature of the water vapour, which is introduced or produced, is at least 200° C.


## Revendications

1) Procédé de réduction de l'émission de PCDD/PCDF dans les gaz sortant d'installations d'incinération de déchets, caractérisé en ce que dans le trajet des gaz d'échappement de la vapeur d'eau surchauffée est soit introduite, soit générée par introduction d'eau.

2) Procédé selon la revendication 1, caractérisé en ce que des sels métalliques à effet de catalyse, de préférence des sels de fer, sont introduits en même temps.

3) Procédé selon la revendication 1, caractérisé en ce que des agents oxydants forts sont introduits en même temps que la vapeur d'eau ou l'eau.

4) Procédé selon la revendication 2, caractérisé en ce que le sel de fer est un sulfate double d'ammonium et de fer.

5) Procédé selon la revendication 3, caractérisé en ce que l'agent oxydant est de l'eau oxygénée ou de l'ozone.

6) Procédé selon l'une des revendications 1 à 5, caractérisé en ce que la température de la vapeur d'eau introduite ou générée atteint au moins 200° C.

FIG.1

FIG. 2

C (ng/Nm3)

FIG. 3

T=200°C    T=300°C    T=400°C    T=500°C

C (ng/Nm3)

FIG. 4

FIG. 5

FIG. 6

FIG. 7